# EUROPEAN PATENT APPLICATION

(11) **EP 2 814 260 A1**
(43) Date of publication of application: **17.12.2014**
(21) Application number: 13305801.6
(22) Date of filing: 13.06.2013
(51) Int. Cl.: H04N 21/4722, H04N 21/81, H04N 21/431, H04N 21/262

(54) **Content selection**

(71) Applicant: ALCATEL LUCENT, 92100 Boulogne-Billancourt (FR)
(72) Inventor: KRISHNAMURTHY, Ramachandran, 600096 Chennai (IN)
(74) Representative: Sarup, David Alexander

(57) **Abstract**

A content selection method, apparatus and computer program product are disclosed. The content selection method comprises: during user access of primary content, displaying, for a selection period, an indication of secondary content to be accessed during a secondary content period; determining user input received during the selection period indicating chosen secondary content to be accessed during the secondary content period; and accessing the chosen secondary content during the secondary content period. In this way, the user is able select or influence the secondary content to be accessed during the secondary content period. This enables the user to choose secondary content likely to be of interest or which is appropriate to the user to help the user maintain interest in either content.

## Description

### FIELD OF THE INVENTION

The present invention relates to a content selection method, apparatus and computer program product.

### BACKGROUND

Networks for distributing content are known. Traditionally, networks for distributing selected content took the form of terrestrial, cable or satellite broadcast network which provide content distributed using those networks to content consumers. Recently, computer networks, such as the Internet, have been used to provide selected content which is distributed using those networks to content consumers.

Although these networks can be used to distribute selected content to content consumers, unexpected consequences can occur.

Accordingly, it is desired to provide an improved technique for selecting content.

### SUMMARY

According to a first aspect, there is provided a content selection method, comprising: during user access of primary content, displaying, for a selection period, an indication of secondary content to be accessed during a secondary content period; determining user input received during the selection period indicating chosen secondary content to be accessed during the secondary content period; and accessing the chosen secondary content during the secondary content period.

The first aspect recognises that user interest in secondary content provided in conjunction with primary content can be limited. In some circumstances, where the secondary content is of so little interest or is so inappropriate, the user may lose interest in either content completely. Accordingly, a method may be provided. The method may comprise the step of: displaying an indication of secondary content to be accessed during a secondary content period. The indication may be displayed for a selection period. The indication may be displayed during user access or streaming of primary content. The method may comprise the step of: determining user input received during the selection period. The user input may indicate chosen secondary content to be accessed or streamed during the secondary content period. The method may also comprise the step of: accessing the chosen secondary content during the secondary content period. In this way, the user is able select or influence the secondary content to be accessed during the secondary content period. This enables the user to choose secondary content likely to be of interest or which is appropriate to the user to help the user maintain interest in either content.

In one embodiment, the selection period comprises one of a period immediately preceding the secondary content period and an initial period of the secondary content period. Hence, the selection period will typically precede the secondary content period to enable the user to choose the secondary content to be displayed during the subsequent secondary content period.

In one embodiment, the user access of the primary content is paused during the secondary content period. It will be appreciated that the primary content may continue to be accessed or streamed, but may have a blanked portion for the secondary content period.

In one embodiment, the secondary content is displayed as at least one of an overlay of the primary content and instead of the primary content during the secondary content period. Hence, the primary content may continue to be displayed or not during the secondary content period.

In one embodiment, the user access of the primary content continues during the secondary content period. Hence, both the primary and secondary content may be concurrently accessed or streamed during the secondary access period.

In one embodiment, the secondary content is displayed concurrently with the primary content during the secondary content period.

In one embodiment, the indication of secondary content to be accessed comprises a plurality of metadata, each associated with the secondary content. Accordingly, any appropriate metadata such as an image, sound, text or the like may be associated with each item of secondary content for selection by the user.

In one embodiment, the metadata comprises at least one of a category, a genre and a visual representation of the secondary content.

In one embodiment, the metadata is displayed as one of a selectable list and a mosaic. It will be appreciated that any appropriate user interface may be provided to enable the user to review and select the appropriate secondary content.

In one embodiment, when the chosen secondary content is insufficient to fill the secondary content period, the chosen secondary content is repeated to fill the secondary content period. Hence, secondary content is accessed or streamed for the duration of the secondary content period.

In one embodiment, when it is determined that no user input is received during the selection period, default secondary content is selected to be accessed during the secondary content period. Accordingly, a default or predefined set of items of secondary content may be accessed or streamed during the secondary content period should the user make no appropriate selection.

In one embodiment, the default secondary content is selected to be accessed based on at least one of preset user preferences; previously chose secondary content; and the primary content. Accordingly, those default items of secondary content may be selected based on a number of different factors.

In one embodiment, the method comprises the step of determining user input received during the secondary content period indicating additional chosen secondary content to be accessed during the secondary content period and accessing the additional chosen secondary content during the secondary content period. Accordingly, the selected secondary content may be adjusted during the secondary content period based on additional user input during that period. The enables the user to modify their selections.

In one embodiment, the secondary content comprises advertising content. It will be appreciated that television watching is moving online with http adaptive streaming (HAS) to multiscreen devices being embraced by both content providers and service providers worldwide. However, the current advertising methodologies used by those providers are not yet fully tuned for exploiting the various possibilities offered by the online environment. Although targeted advertising based on various static user preferences have been implemented in internet protocol television (IPTV) environments, this has still been driven more by the IPTV service provider. The served user had little control of the advertisement play-out scenarios and interactivity was completely absent. However, with the technological advances particularly in an over the top (OTT) environment and with the devices on which video is consumed becoming more intelligent, opportunities are created to open up and revisit the advertising methodologies used. Although targeted advertisement has been offered based on static user preferences in some cases, the control still resides predominantly with the service provider and in any case there was limited or no interactivity with the served user. Embodiments therefore provide the possibility for the user to select advertisements of interest to them to ensure that they continue to maintain interest in both the advertisements and the primary content.

According to a second aspect, there is provided a computer program product operable, when executed on a computer, to perform the method steps of the first aspect.

According to a third aspect, there is provided a data processing apparatus, comprising: displaying logic operable, during user access of primary content, to display, for a selection period, an indication of secondary content to be accessed during a secondary content period; determining logic operable to receive user input during the selection period indicating chosen secondary content to be accessed during the secondary content period; and accessing logic operable to access the chosen secondary content during the secondary content period.

In one embodiment, the selection period comprises one of a period immediately preceding the secondary content period and an initial period of the secondary content period.

In one embodiment, the displaying logic is operable to pause user access of the primary content during the secondary content period.

In one embodiment, the displaying logic is operable to display the secondary content as at least one of an overlay of the primary content and instead of the primary content during the secondary content period.

In one embodiment, the displaying logic is operable to continue the user access of the primary content during the secondary content period.

In one embodiment, the displaying logic is operable to display the secondary content concurrently with the primary content during the secondary content period.

In one embodiment, the indication of secondary content to be accessed comprises a plurality of metadata, each associated with the secondary content.

In one embodiment, the metadata comprises at least one of a category, a genre and a visual representation of the secondary content.

In one embodiment, the displaying logic is operable to display the metadata as one of a selectable list and a mosaic.

In one embodiment, when the chosen secondary content is insufficient to fill the secondary content period, the determining logic is operable to repeat the secondary content to fill the secondary content period.

In one embodiment, the determining logic is operable, when it is determined that no user input is received during the selection period, to select default secondary content to be accessed during the secondary content period.

In one embodiment, the determining logic is operable select the default secondary content to be accessed based on at least one of preset user preferences; previously chose secondary content; and the primary content.

In one embodiment, the determining logic is operable to receive user input during the secondary content period indicating additional chosen secondary content to be accessed during the secondary content period and the assessing logic is operable to access the additional chosen secondary content during the secondary content period.

In one embodiment, the secondary content comprises advertising content.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a content providing network according to one embodiment; and
Figure 2 is a graphical view of the user-experience according to one embodiment.

### DESCRIPTION OF THE EMBODIMENTS

### Overview

Before discussing the embodiments in any more detail, first an overview will be provided. Embodiments provide interactivity options for the end-user (served user) to personalize and define their secondary content or advertisement consumption. In a traditional delivery mode using broadcast mechanisms, secondary content (such as, for example, advertisements or other content) are inserted by the service provider and are consumed by the end users. In an over-the-top (OTT) environment, a live streaming session is typically established which provides primary content (such as movies, television or radio programmes or the like) with secondary content (such as advertisements or the like) inserted in the stream. Typically, the play-out of the secondary content happens from a secondary content server which is generally a different server to the primary content server from where the primary content (such as audio and/or video) is streamed. However, the primary and secondary content server may be the same server. In an example arrangement, there are, for example, multiple items of secondary content or advertisements in a particular secondary content or advertisement slot in the stream. Normally such a collection of secondary content or advertisements for a slot is referred to by the Interactive Advertising Bureau Video Ad Serving Template (VAST) as an "ad-pod". However, these approaches provide little opportunity for a user to influence the selection of the secondary content.

Accordingly, embodiments provide the subscriber with more freedom to choose to watch the secondary content or advertisements he wants in a secondary content or advertisement slot. The client accessing the primary content displays the secondary content options for the secondary content or advertisement slot as a kind of mosaic (or feed format) for the user to select from. The user can then select, using remote or other user interface (UI) mechanism, a number of items of secondary content or advertisements he wants to be displayed. The served user can also select categories of secondary content or advertisements to be played out instead of picking the secondary content or advertisements one by one. For example, secondary content or advertisements related to categories like cars or beverages can be selected by the served user dynamically using the UI provided by the client. In fact, the selection of the secondary content or advertisement to be played for the end-user can be dynamically selected based on various meta-data items (such as an audio and/or visual representation) associated with the secondary content or advertisements available for inclusion in the secondary content slot or ad-pod.

The client then plays out only the selected secondary content or advertisements in the secondary content slot or ad-pod. The selected secondary content or advertisements may be repeated for the entire duration of the particular secondary content slot or ad-pod, should selected secondary content or advertisements be of insufficient duration to fill the secondary content slot or ad-pod.

For example, considering a situation where there are to be 10 items of secondary content or advertisements for inclusion in the secondary content slot or ad-pod. The client displays the feed or mosaic of metadata (showing a catalogue of items of secondary content or advertisements planned for that slot) of all the items of secondary content or advertisements either preceding or at the start of the secondary content slot or ad-pod. The user is then given a few seconds (using a secondary content or advertisements-selection timer) to select the set of secondary content or advertisements that he wants to watch. Once the user selects the secondary content or advertisements (say secondary content or advertisements 1 and 4), the client just plays out secondary content or advertisements 1 and 4. These may be repeated 2 or 3 times until the secondary content slot or ad-pod finishes. Of course, had the user chosen the category as "cars", only the secondary content or advertisements that have the category "cars" will be selected and played out to the served user. The user may make selections during the streaming of the secondary content or advertisements to change or adjust the secondary content or advertisements being played out by either interacting with the feed or mosaic of metadata or by making selections within the secondary content or advertisements being played out. For example, the user may be able to recall the feed or mosaic of metadata or may be able to make selections to select, for example, similar secondary content or advertisements or other secondary content or advertisements highlighted within another secondary content or advertisement.

Considering a secondary content slot or ad-pod of around 150 seconds, the secondary content or advertisements-selection timer can be for around 5 seconds. This is the time during which the served user can chose his secondary content or advertisements interactively. The secondary content or advertisements-selection timer can be set and defined in the network by a secondary content or advertisement engine at the service provider, so that uniform synchronization of the secondary content or advertisements delivery and streaming is achieved.

If the served user does not make any selection during the secondary content or advertisements-selection timer, a default set of secondary content or advertisements as defined by the service provider will continue to play as normal during the secondary content slot or ad-pod.

This approach extends the level of interactivity that OTT offers for secondary content or advertisements play-out and will also be a differentiator over traditional broadcast or Direct-to-Home (DTH) delivery mechanisms.

Of-course this concept can also be extended to the play-out of non-linear secondary content or advertisements. For non-linear secondary content or advertisements, the user can choose the category or any-other metadata and then only the secondary content or advertisements belonging to that category will be played out as non-linear secondary content or advertisements to the served user.

Further, fine-tuning, can be achieved by incorporating more intelligence in the clients regarding the secondary content or advertisements play-out. For example, based on subscription levels of the served user, the secondary content or advertisements play-out can be dynamically altered by the client using some metadata in the secondary content or advertisements.

### Example Implementation

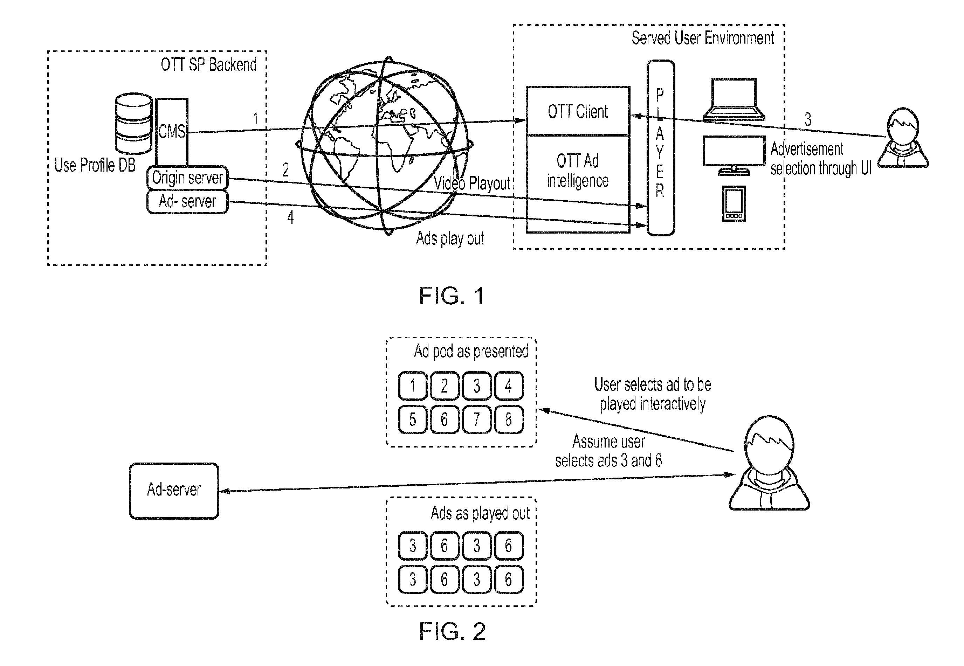

Figure 1 illustrates, in overview, a content providing network according to one embodiment. In order to improve clarity, a simplified version of an OTT system is shown, which has a service provider part containing the backend and the head-end delivering video streams to the served user.

In this example, the served user is a multiscreen user enjoying video services over various multiscreen devices using Hypertext Transfer Protocol (HTTP) Adaptive Streaming (HAS). Each of the multiscreen devices has a video client and a player that enable the served user to consume the video services offered by the OTT service provider.

In the served user side, the end-user is able to interactively choose the secondary content or advertisements to be played out from the secondary content slot or ad-pod presented in the OTT video stream.

In keeping with the legacy IPTV world, it would be ideal to have the OTT Ad intelligence client as an add-on module that can be provided or not to the end-users based on the service provider business requirements.

The general operation is as follows:
1) Typically, during the log in of the OTT client, the backend returns (among other information) the subscription and other profile information of the served user. The OTT client will normally save this information for the session or until it makes a request via the appropriate application programming interface (API) call to retrieve the needed information of the served user.
2) The served user selects a channel and is currently watching the channel. The live channel is streamed as primary content from the live origin to the served user, this primary content may be a live stream or may be video-on-demand, catch-up, etc.). In the stream, there is a secondary content slot or ad-slot containing a number of items of secondary content or advertisements. The client shows the items of secondary content or advertisements as a kind of catalogue or mosaic and presents a UI to the user to enable the user to interactively select the items of secondary content or advertisements. The primary content may be paused or may continue to be shown during display of the UI. Depending on the extent of meta-data available and the business requirements, this UI can be designed to be a simple selection of secondary content or advertisement identifiers, or more meta-data, or may be software intelligence driven. The client implements the secondary content or advertisements-selection timer as defined in the ad-pod and provides the UI for the items of secondary content or advertisements selection interactively to the served user only during the time that the secondary content or advertisements-selection timer is active.
3) The OTT client receives the preference input of the served user for this secondary content or advertisements-slot and triggers the secondary content or ad-server for the play-out of the chosen items of secondary content or advertisements as it does normally.
4) The secondary content or ad-server plays out the items of secondary content or advertisements as requested by the client. In order to repeat the same items of secondary content or advertisements, the client can either buffer the items of secondary content or advertisements for repeated play-out or just keep requesting the items of secondary content or advertisements from the secondary content or ad-server repeatedly. This is just a matter of client implementation.

Figure 2 is a graphical view of the user-experience according to one embodiment. The user is given the choice of a number of items of secondary content or advertisements. In this example, the user selects items of secondary content or advertisements 3 and 6. Items of secondary content or advertisements 3 and 6 are then alternately repeated for the duration of the secondary content or advertisements-slot. It will be appreciated that other UIs could be provided.

It can be seen that the interactivity element in the secondary content or advertisements selection provides better targeted advertising and also guaranteed subscriber off-take of the secondary content or advertisements. In addition, the broadcaster or channel reduces the risk of losing the subscriber due to boring secondary content or advertisement breaks.

This approach enhances the interactivity and user-experience during the secondary content or advertisement play-out in an OTT environment. Effectiveness of secondary content or advertisement provision and reach may be drastically improved.

In particular, embodiments provide a unique way of providing control to the subscriber over what he watches as secondary content or advertisements.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A content selection method, comprising:
during user access of primary content, displaying, for a selection period, an indication of secondary content to be accessed during a secondary content period;
determining user input received during said selection period indicating chosen secondary content to be accessed during said secondary content period; and
accessing said chosen secondary content during said secondary content period.

2. The method of claim 1, wherein said selection period comprises one of a period immediately preceding said secondary content period and an initial period of said secondary content period.

3. The method of claim 1 or 2, wherein said user access of said primary content is paused during said secondary content period.

4. The method of any preceding claim, wherein said secondary content is displayed as at least one of an overlay of said primary content and instead of said primary content during said secondary content period.

5. The method of any preceding claim, wherein said user access of said primary content continues during said secondary content period.

6. The method of any preceding claim, wherein said secondary content is displayed concurrently with said primary content during said secondary content period.

7. The method of any preceding claim, wherein said indication of secondary content to be accessed comprises a plurality of metadata, each associated with said secondary content.

8. The method of claim 7, wherein said metadata comprises at least one of a category, a genre and a visual representation of said secondary content.

9. The method of claim 7 or 8, wherein said metadata is displayed as one of a selectable list and a mosaic.

10. The method of any preceding claim, wherein when said chosen secondary content is insufficient to fill said secondary content period, said chosen secondary content is repeated to fill said secondary content period.

11. The method of any preceding claim, wherein when it is determined that no user input is received during said selection period, default secondary content is selected to be accessed during said secondary content period.

12. The method of any preceding claim, comprising the step of determining user input received during said secondary content period indicating additional chosen secondary content to be accessed during said secondary content period and accessing said additional chosen secondary content during said secondary content period.

13. The method of any preceding claim, wherein said secondary content comprises advertising content.

14. A computer program product operable, when executed on a computer, to perform the method steps of any preceding claim.

15. A data processing apparatus, comprising:
displaying logic operable, during user access of primary content, to display, for a selection period, an indication of secondary content to be accessed during a secondary content period;
determining logic operable to receive user input during said selection period indicating chosen secondary content to be accessed during said secondary content period; and
accessing logic operable to access said chosen secondary content during said secondary content period.
